# DEMANDE DE BREVET EUROPEEN

(11) **EP 1 619 645 A1**
(43) Date de publication de la demande: **25.01.2006**
(21) Numéro de dépôt: 04017584.6
(22) Date de dépôt: 24.07.2004
(51) Int. Cl.: G09B 21/02

(54) **Dispositif pour composer des mots en braille**

(71) Demandeur: Betton, René, 61100 Flers (FR)
(72) Inventeur: Betton, René, 61100 Flers (FR)

(57) **Abrégé**

Dispositif pour composer des mots en braille.

L'invention concerne un dispositif permettant de composer des mots en braille en déplaçant le sommet de bâtonnets guidés dans des rainures, manuellement et en utilisant des points déjà présents à chaque emplacement de lettre.

Il comprend un support ( 1 ) avec des évidements ( 2 ) ou sont placés des bâtonnets ( 3 ) dont les sommets ( 5 ) représentent les points. Les bâtonnets sont guidés dans les rainures de grilles ( 4 ) et articulés à leur base ( 6 ), ainsi le mouvement vers le centre des grilles permet de former des caractères avec une lecture simultanée.

Le dispositif selon l'invention est particulièrement destiné aux personnes aveugles ou malvoyantes.

## Description

La présente invention concerne un dispositif pour composer des mots en braille, prendre des notes ou jouer aux mots croisés.

La composition des mots peut se faire soit par le déplacement de petits curseurs nécessitant l'emploi d'un onglet, par apport de points ceux-ci étant à prélever en dehors du dispositif et difficiles à manier du fait de leur miniaturisation ou par déplacement vertical avec mécanisme et points incrustés.

Le dispositif selon l'invention permet de remédier à ces inconvénients. Il comporte en effet un support avec des évidements et dans chacun de ceux-ci des bâtonnets dont le sommet, dans une position déterminée, représente un point. Ces bâtonnets sont guidés dans des rainures et articulés à leur base ainsi le déplacement de leur partie supérieure près du centre permet de composer les caractères le plus souvent manuellement, sans mécanisme et avec des éléments présents sur l'appareil. La composition s'effectue en déplaçant le sommet de bâtonnets sur le dessus du dispositif soit en les rapprochant du centre ou les éloignant pour l'obtention de points formant des caractères et constater simultanément leur positionnement .Le point d'articulation situé au fond et près du centre des évidements donne une position proche de la verticale avec dépassement du sommet de ces bâtonnets ou une inclinaison avec un dépassement moindre et distant de la zone de lecture.

Les dessins annexés illustrent l'invention :
La figure 1 représente en coupe, le dispositif de l'invention.
La figure 2 représente la vue de dessus de ce dispositif.

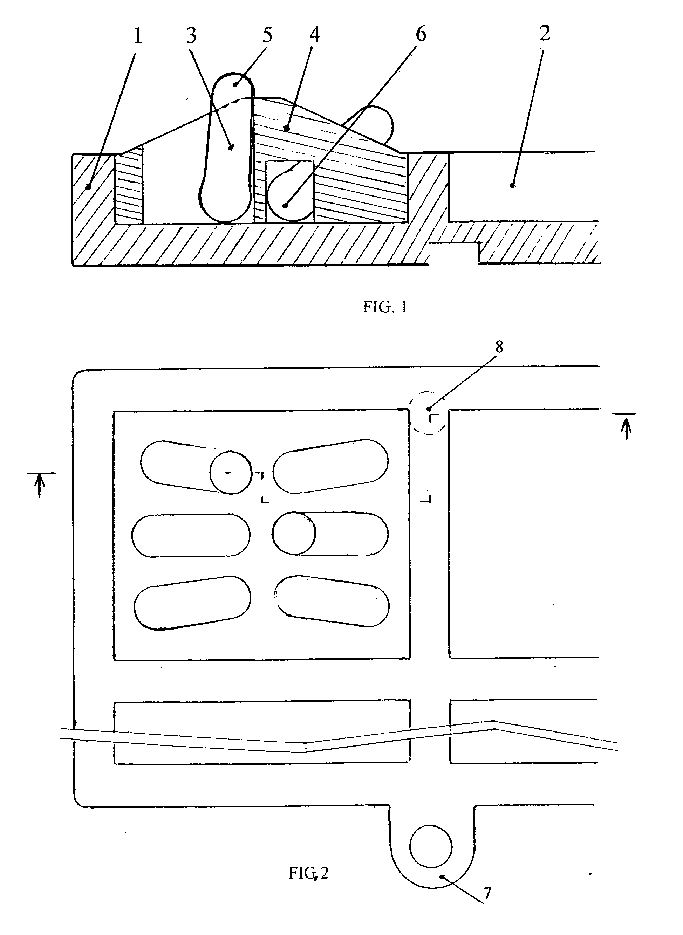

En référence à ces dessins le dispositif comporte un support ( 1 ) avec des évidements ( 2 ) où sont placés dans chacun de ceux-ci des bâtonnets ( 3 ) maintenus et guidés dans des grilles ( 4 ) le déplacement en direction du centre de la partie supérieure et arrondie ( 5 ) de ces bâtonnets articulés à leur base arrondie ( 6 ) permet l'obtention de points pour former des caractères en braille. Le mouvement des bâtonnets s'effectue avec articulation de la base arrondie en appui dans des cavités qui positionnent l'axe de l'articulation et le dépassement des bâtonnets. Les grilles sont réalisées en matière souple avec des rainures disposées de part et d'autre de leur centre, celle-ci maintiennent avec un léger serrage les bâtonnets dans une position déterminée, les points se situant soit au centre ou dégagés sur les côtés. Les bâtonnets sont plus gros dans leur partie inférieure et sont ainsi retenu par les grilles. Le support (1) dispose éventuellement d'anneaux ( 7 ) sur un ou deux côtés perpendiculaires et de tétons ( 8 ) sous un ou deux côtés pour retenir juxtaposés d'autres supports. Le dispositif peut etre réalisé en matière plastique.

## Revendications

1. Dispositif pour composer des mots en braille **caractérisé en ce qu'**il comporte un support ( 1 ) avec des évidements ( 2 ) où sont placés dans chacun de ceux-ci des bâtonnets ( 3 ) maintenus et guidés dans des grilles ( 4 ) le déplacement en direction du centre de la partie supérieure et arrondie ( 5 ) de ces bâtonnets articulés à leur base arrondie ( 6 ) permet l'obtention de points pour former des caractères en braille.

2. Dispositif selon la revendication 1 **caractérisé en ce que** le mouvement des bâtonnets s'effectue avec articulation de la base arrondie en appui dans des cavités qui positionnent l'axe de l'articulation et le dépassement des bâtonnets.

3. Dispositif selon les revendications 1 et 2 **caractérisé en ce que** les grilles sont réalisées en matière souple avec des rainures disposées de part et d'autre de leur centre, celles-ci maintiennent avec un léger serrage les bâtonnets dans une position déterminée, les points se situant soit au centre ou dégagés sur les côtés.

4. Dispositif selon la revendication précédente **caractérisé en ce que** les bâtonnets sont plus gros dans leur partie inférieure et sont ainsi retenu par les grilles.

5. Dispositif selon l'une quelconque des revendications précédentes **caractérisé en ce que** le support ( 1 ) dispose éventuellement d'anneaux ( 7 ) sur un ou deux côtés perpendiculaires et de tétons ( 8 ) sous un ou deux côtés pour retenir juxtaposés d'autres supports.
